# EUROPÄISCHE PATENTSCHRIFT

(11) **EP 2 697 878 B1**
(45) Veröffentlichungstag und Bekanntmachung des Hinweises auf die Patenterteilung: **13.12.2017**
(21) Anmeldenummer: 11718377.2
(22) Anmeldetag: 06.05.2011
(51) Int. Cl.: H02H 1/04, H02H 7/26, H02J 3/24, H02H 3/05, H02H 3/40, H02H 7/30

(54) **VERFAHREN UND SCHUTZGERÄT ZUM ERKENNEN EINES SYMMETRISCHEN KURZSCHLUSSES IN EINEM MEHRPHASIGEN ELEKTRISCHEN ENERGIEVERSORGUNGSNETZ**
METHOD AND PROTECTIVE DEVICE FOR RECOGNISING A SYMMETRICAL SHORT-CIRCUIT IN A MULTI-PHASE ELECTRICAL POWER SUPPLY NETWORK
PROCÉDÉ ET APPAREIL DE PROTECTION POUR DÉTECTER UN COURT-CIRCUIT SYMÉTRIQUE DANS UN RÉSEAU D'ALIMENTATION EN ÉNERGIE ÉLECTRIQUE MULTIPHASE

(43) Veröffentlichungstag der Anmeldung: 19.02.2014
(73) Patentinhaber: Siemens Aktiengesellschaft, 80333 München (DE)
(72) Erfinder: BLUMSCHEIN, Jörg, 14165 Berlin (DE); CLAUS, Michael, 90482 Nürnberg (DE); HENN, Volker, 91056 Erlangen (DE); KEREIT, Matthias, 12159 Berlin (DE); STEYNBERG, Gustav, 91338 Igensdorf (DE); YELGIN, Yilmaz, 13589 Berlin (DE)
(86) Internationale Anmeldenummer: PCT/EP2011/057287
(87) Internationale Veröffentlichungsnummer: WO 2012/152304

(56) Entgegenhaltungen:
- WO-A1-2010/006632
- DE-A1- 4 100 646
- MOORE P J ET AL: "New method of power swing blocking for digital distance protection", IEE PROCEEDINGS: GENERATION, TRANSMISSION AND DISTRIBUTION, INSTITUTION OF ELECTRICAL ENGINEERS, GB, Bd. 143, Nr. 1, 30. Januar 1996 (1996-01-30), Seiten 19-26, XP006006437, ISSN: 1350-2360, DOI: 10.1049/IP-GTD:19960055

## Beschreibung

Die Erfindung betrifft ein Verfahren zum Erkennen eines symmetrischen Kurzschlusses in einem mehrphasigen elektrischen Energieversorgungsnetz, bei dem mit einem ersten Schutzgerät ein erster Abschnitt des Energieversorgungsnetzes auf einen symmetrischen Kurzschluss überwacht wird und mit einem zweiten Schutzgerät ein zweiter Abschnitt des Energieversorgungsnetzes auf einen symmetrischen Kurzschluss überwacht wird. Dabei ist das zweite Schutzgerät dazu eingerichtet, als Reserveschutzgerät unter Ausführung einer Distanzschutzfunktion auch den ersten Abschnitt des Energieversorgungsnetzes auf einen symmetrischen Kurzschluss zu überwachen und bei Erkennung eines symmetrischen Kurzschlusses in dem ersten Abschnitt nach Ablauf einer vorgegebenen Staffelzeit einen Ausschaltbefehl an einen Leistungsschalter abzugeben. Außerdem ist eine Pendelerkennungseinrichtung vorgesehen, die das Energieversorgungsnetz auf das Vorliegen einer elektrischen Pendelung überwacht und ein die Abgabe des Ausschaltbefehls durch das zweite Schutzgerät blockierendes Pendelsignal abgibt, wenn eine Pendelung in dem Energieversorgungsnetz erkannt worden ist. Die Erfindung betrifft auch ein elektrisches Schutzgerät zum Überwachen eines elektrischen Energieversorgungsnetzes.

Elektrische Energieversorgungsnetze werden üblicherweise abschnittsweise mit sogenannten Schutzgeräten auf unzulässige Betriebszustände, wie beispielsweise Kurzschlüsse oder Erdschlüsse, überwacht. Beim Auftreten eines solchen unzulässigen Betriebszustands trennen die Schutzgeräte den von dem Fehler betroffenen Teil des Energieversorgungsnetzes vom restlichen Netz durch Öffnen entsprechender Leistungsschalter ab und vermeiden so eine Gefährdung für Personen und Komponenten des elektrischen Energieversorgungsnetzes. Zur Überwachung der einzelnen Abschnitte des elektrischen Energieversorgungsnetzes führen die Schutzgeräte sogenannte Schutzalgorithmen aus. Hierbei wird unter Verwendung von Messwerten, bei denen es sich beispielsweise um den Strom und die Spannung an einer Messstelle des elektrischen Energieversorgungsnetzes charakterisierende Messwerte handeln kann, eine Entscheidung darüber getroffen, ob ein unzulässiger oder ein zulässiger Betriebszustand vorliegt.

Ein häufig in diesem Zusammenhang eingesetzter Schutzalgorithmus arbeitet nach dem sogenannten Distanzschutzverfahren, bei dem aus Strom- und Spannungsmesswerten in einer komplexen Zahlenebene liegende Impedanzwerte berechnet werden und überprüft wird, ob die Impedanzwerte innerhalb eines - auch als Auslösepolygon bezeichneten - vorgegebenen Bereiches liegen. Sofern die Impedanzwerte innerhalb dieses vorgegebenen Bereiches liegen, stellt das Distanzschutzgerät einen unzulässigen Betriebszustand an dem von ihm überwachten Abschnitt des elektrischen Energieversorgungsnetzes fest und sendet ein Auslösesignal an einen oder mehrere den Abschnitt begrenzende Leistungsschalter, um den fehlerhaften Abschnitt vom restlichen Energieversorgungsnetz zu trennen. Hierbei unterscheidet der Distanzschutzalgorithmus zwischen sogenannten internen Fehlern, die den von dem Distanzschutzgerät unmittelbar überwachten Abschnitt des Energieversorgungsnetzes betreffen, und externen Fehlern, die außerhalb dieses Abschnittes liegen und in den unmittelbaren Zuständigkeitsbereich eines anderen Schutzgeräts fallen. Während ein Distanzschutzgerät bei internen Fehlern unverzüglich eine Abschaltung seines fehlerbehafteten Abschnittes veranlassen muss, dient es bei externen Fehlern üblicherweise als Reserveschutz. Schaltet ein für den externen Fehler zuständiges anderes Schutzgerät den Fehler nicht innerhalb einer vorgegebenen Staffelzeit ab, so veranlasst das als Reserveschutz fungierende Distanzschutzgerät nach Abwarten dieser Zeitspanne eine Abschaltung. In dem als Reserveschutz fungierenden Distanzschutzgerät können auch mehrere unterschiedlich lange Staffelzeiten vorgesehen sein. So eine Reserveschutzfunktion eines Distanzschutzgeräts ist aus der Patentanmeldung WO 2010/0006632 bekannt. Bei plötzlichen Laständerungen oder Veränderungen an der Struktur des elektrischen Energieversorgungsnetzes (beispielsweise durch Zu- oder Abschalten größerer Netzteile) kann es im elektrischen Energieversorgungsnetz zu sogenannten Pendelvorgängen bzw. Netzpendelungen, die im Folgenden der Einfachheit halber als "Pendelungen" bezeichnet werden sollen, kommen, da sich die Generatoren an den Einspeisestellen des elektrischen Energieversorgungsnetzes auf die neue Lastsituation einstellen müssen. Dies geschieht üblicherweise in Form einer gedämpften Schwingung, bis sich der neue Arbeitspunkt des elektrischen Energieversorgungsnetzes stabilisiert hat. Während einer Pendelung pendeln Strom und Spannung sozusagen entlang der Energieversorgungsleitungen zwischen hohen und niedrigen Werten. Daher kann es bei einer Pendelung häufig vorkommen, dass ein elektrisches Distanzschutzgerät an seiner Messstelle niedrige Spannungen bei gleichzeitig hohen Strömen misst und daraus geringe Impedanzwerte berechnet, die innerhalb eines Auslösepolygons liegen. Da eine gedämpfte - auch als synchron bezeichnete - Pendelung üblicherweise jedoch keinen gefährlichen Betriebszustand des elektrischen Energieversorgungsnetzes beschreibt, soll in einem solchen Fall keine Auslösung erfolgen. Bei bloßer Anwendung der Distanzschutzfunktion würde das Distanzschutzgerät jedoch einen unzulässigen Betriebszustand erkennen, und den überwachten Abschnitt des elektrischen Energieversorgungsnetzes abschalten. Hierdurch können ungewollte Fehlabschaltungen bestimmter Teile des elektrischen Energieversorgungsnetzes stattfinden, die üblicherweise für den Betreiber des elektrischen Energieversorgungsnetzes mit hohen Kosten verbunden sind. Außerdem kann durch die sich durch die Fehlabschaltung sprunghaft verändernde Netzstruktur eine Überlastung noch eingeschalteter Abschnitte des elektrischen Energieversorgungsnetzes erfolgen, was zu kaskadierenden Abschaltungen bis hin zu einem sogenannten Blackout führen kann.

Um bei Pendelungen ungewollte Fehlauslösungen zu vermeiden, werden üblicherweise sogenannte Pendelerkennungseinrichtungen vorgesehen. Wenn eine Pendelerkennungseinrichtung eine Pendelung erkennt, gibt sie ein Pendelsignal ab. Dieses Pendelsignal kann beispielsweise dazu verwendet werden, die Abgabe eines Auslösesignals an einen elektrischen Leistungsschalter durch ein Distanzschutzgerät zu blockieren. Eine Pendelerkennungseinrichtung kann hierbei entweder integrierter Bestandteil eines Schutzgerätes sein oder eine separate Einrichtung bilden, die mit einem Schutzgerät in Wirkverbindung steht.

Distanzschutzgeräte mit integrierter Pendelerkennung werden von der Anmelderin beispielsweise unter dem Namen "SIPROTEC Distanzschutz 7SA6" angeboten. Die entsprechenden Geräte sind aus dem Gerätehandbuch der Siemens AG "SIPROTEC Distanzschutz 7SA6, V4.7" aus dem Jahr 2010, Bestellnummer der Siemens AG C53000-G1100-C156-8, bekannt. Im Abschnitt 2.3 "Maßnahmen bei Netzpendelungen" ist in diesem Gerätehandbuch beschrieben, dass zur Pendelerkennung ein von Impedanzwerten in einer komplexen Zahlenebene gebildeter Kurvenverlauf auf charakteristische Eigenschaften wie z.B. "Kontinuität", "Monotonie" und "sprunghaftes Verhalten" untersucht wird und anhand der Untersuchungsergebnisse im Falle einer erkannten Pendelung ein Pendelsignal erzeugt wird.

Auch im Artikel "New method of power swing blocking for digital distance protection" vom P.J. Moore und A.T.Johns ist ein Verfahren zum Unterscheiden zwischen Kurzschlüssen und Pendelungen erwähnt. Pendelerkennungseinrichtungen können bei symmetrischen Kurzschlüssen, also gleichzeitig in allen Phasen des Energieversorgungsnetzes auftretenden Kurzschlüssen, fehlerhaft ansprechen, da sich die gemessenen Impedanzen während eines symmetrischen Kurzschlusses aufgrund der Polradwinkeländerungen der Generatoren bewegen. Je nach Fehlerort, Fehlerdauer und Einspeiseverhältnisse können diese Impedanzbewegungen groß sein. Liegt der symmetrische Kurzschluss in dem ersten Abschnitt des Energieversorgungsnetzes und das erste Schutzgerät löst (z.B. aufgrund eines Defektes) dennoch nicht aus, kann durch das fehlerhafte Ansprechen der Pendelerkennungseinrichtung die Erzeugung eines Abschaltbefehls für den ersten Abschnitt durch das zweite Schutzgerät verhindert werden.

Der Erfindung liegt die Aufgabe zugrunde, eine Möglichkeit anzugeben, mit der externe symmetrische Kurzschlüsse zuverlässig erkannt und unabhängig von einer auftretenden Pendelung abgeschaltet werden können.

Diese Aufgabe wird erfindungsgemäß durch ein Verfahren der eingangs angegebenen Art gelöst, bei dem einerseits für den Fall, dass von dem zweiten Schutzgerät ein symmetrischer Kurzschluss in dem ersten Abschnitt erkannt worden ist, bevor von der Pendelerkennungseinrichtung eine Pendelung in dem Energieversorgungsnetz erkannt worden ist, der Ausschaltbefehl unabhängig vom Vorliegen eines Pendelsignals abgegeben wird, wenn die Staffelzeit abgelaufen ist, und andererseits für den Fall, dass von der Pendelerkennungseinrichtung eine Pendelung erkannt worden ist, bevor von dem zweiten Schutzgerät ein symmetrischer Kurzschluss in dem ersten Abschnitt erkannt worden ist, der Ausschaltbefehl durch das anstehende Pendelsignal blockiert wird.

Durch das erfindungsgemäße Verfahren wird eine Überfunktion der Pendelerkennung während symmetrischer Kurzschlüsse wirksam vermieden. Der Erfindung liegt dabei die Erkenntnis zugrunde, dass bei einem Kurzschluss eine Pendelerkennung nicht sofort ansprechen wird, da sich der Polradwinkel des Generators bei stationären Bedingungen erst nach einer gewissen Eigenzeit verändert. Erst bei einer deutlichen Polradwinkeländerung entstehen pendelartige Vorgänge im Energieversorgungsnetz. Dadurch dass das zweite Schutzgerät eine Überprüfung der Reihenfolge des zeitlichen Eintretens der Erkennung des symmetrischen Kurzschlusses in dem ersten Abschnitt und der Erkennung einer Pendelung in dem Energieversorgungsnetz vornimmt und je nach erkannter Reihenfolge unterschiedlich reagiert, kann ein Blockieren der Reserveschutzfunktion für den ersten Abschnitt durch eine erkannte Pendelung wirksam verhindert werden.

Konkret reagiert das zweite Schutzgerät in folgender Weise: Für den Fall, dass ein symmetrischer Kurzschluss vorliegt, wird innerhalb kürzester Zeit eine Anregung der Reserveschutzfunktion in allen drei Phasen erfolgen. Die aktuell gebildete Schutzzonenanregung wird gespeichert. Die entsprechende Staffelzeit wird gestartet. Bewegen sich die Impedanzzeiger aufgrund des symmetrischen Kurzschlusses in pendelartiger Weise, wird daraufhin eine Pendelerkennung in allen drei Phasen ansprechen. In diesem Fall wird das Messwerk der Schutzfunktion gesperrt, d.h. die letzte gebildete Zonenanregung wird quasi "eingefroren". Der Ablauf der Staffelzeit bleibt unberührt. Nach Ablauf der Staffelzeit wird der Reserveschutz für den ersten Abschnitt einen den Leistungsschalter auslösenden Ausschaltbefehl erzeugen und der Kurzschluss wird abgeschaltet.

Für den Fall, dass eine symmetrische Pendelung vorliegt, wird die Pendelerkennung vor dem Reserveschutz anregen. Bei der ersten Anregung des Reserveschutzes wird das Messwerk des zweiten Schutzgerätes durch das anstehende Pendelsignal blockiert. Es kommt zu keiner Abgabe eines Ausschaltbefehls und damit auch zu keiner Auslösung eines Leistungsschalters.

Gemäß einer vorteilhaften Ausführungsform des erfindungsgemäßen Verfahrens ist vorgesehen, dass der Ablauf der Staffelzeit abgebrochen wird, wenn das zweite Schutzgerät eine Beendigung des symmetrischen Kurzschlusses erkennt.

Hierdurch kann eine Abschaltung durch das zweite Schutzgerät vermieden werden, wenn der Kurzschluss anderweitig geklärt wurde, z.B. durch das erste Schutzgerät. Dies ist insbesondere deswegen von Vorteil, weil das zweite Schutzgerät üblicherweise nicht denjenigen Leistungsschalter öffnet, der sich in unmittelbarer Nähe zum symmetrischen Kurzschluss befindet, sondern vielmehr den dem zweiten Schutzgerät zugeordneten Leistungsschalter zum Öffnen veranlasst, wodurch ein größerer Teil des Energieversorgungsnetzes stromlos geschaltet wird.

Eine weitere vorteilhafte Ausführungsform des erfindungsgemäßen Verfahrens sieht vor, dass zur Erkennung eines symmetrischen Kurzschlusses in dem ersten Abschnitt das zweite Schutzgerät für jede Phase Stromzeiger- und Spannungszeigermesswerte an einer dem zweiten Abschnitt zugeordneten Messstelle aufnimmt, aus den Stromzeigermesswerten und den zugehörigen Spannungszeigermesswerten für jede Phase Impedanzzeigerwerte bildet und deren Lage in einem komplexen Impedanzdiagramm überprüft, wobei in dem Impedanzdiagramm ein Auslösepolygon vorgesehen ist, das eine Hauptschutzzone und zumindest eine Reserveschutzzone aufweist, der die Staffelzeit zugeordnet ist. Das zweite Schutzgerät erkennt hierbei einen symmetrischen Kurzschluss in dem ersten Abschnitt, wenn die Impedanzzeigerwerte jeder Phase in der zumindest einen Reserveschutzzone liegen.

Auf diese Weise kann eine Entscheidung über einen in dem ersten Abschnitt aufgetretenen externen Fehler sehr einfach anhand der Lage der Impedanzwerte in dem Auslösepolygon getroffen werden.

In diesem Zusammenhang kann zudem vorgesehen sein, dass zumindest zwei Reserveschutzzonen vorgesehen sind, denen unterschiedlich lange Staffelzeiten zugeordnet sind, und für den Fall, dass von dem zweiten Schutzgerät ein symmetrischer Kurzschluss in dem ersten Abschnitt erkannt worden ist, bevor von der Pendelerkennungseinrichtung eine Pendelung in dem Energieversorgungsnetz erkannt worden ist, zur Abgabe des Ausschaltbefehls für den ersten Abschnitt diejenige Staffelzeit herangezogen wird, die der Reserveschutzzone zugeordnet ist, in der die Impedanzzeigerwerte unmittelbar vor der Erkennung der Pendelung lagen.

Diese Ausführungsform besitzt den Vorteil, dass sich eine Pendelung, bei der die Impedanzwerte mehrere Reserveschutzzonen durchlaufen, nicht nachträglich auf die Staffelzeit auswirkt. Vielmehr wird zur Bildung des Abschaltbefehls die Staffelzeit herangezogen, die der Reserveschutzzone zugeordnet ist, in der die Impedanzwerte vor der Pendelerkennung aktuell lagen.

Die oben genannte Aufgabe wird auch durch ein Schutzgerät zur Überwachung eines elektrischen Energieversorgungsnetzes mit einer Messwerterfassungseinrichtung zur Erfassung von Stromzeiger- und Spannungszeigermesswerten und einer Steuereinrichtung gelöst, die zur Erkennung von symmetrischen Kurzschlüssen in dem Energieversorgungsnetz anhand der erfassten Stromzeiger- und Spannungszeigermesswerte eingerichtet ist. Erfindungsgemäß ist vorgesehen, dass die Steuereinrichtung zur Durchführung eines Verfahrens gemäß einem der Ansprüche 1 bis 4 eingerichtet ist.

Hinsichtlich des Schutzgerätes kann zudem vorgesehen sein, dass die Pendelerkennungseinrichtung Bestandteil des Schutzgerätes ist.

Die Erfindung wird im Folgenden anhand von Ausführungsbeispielen näher erläutert. Hierzu zeigen:
- Figur 1: eine schematische Darstellung eines Abschnitts eines elektrischen Energieversorgungsnetzes,
- Figur 2: ein schematisches Logikschaltbild zur Erläuterung einer Ausführungsform des erfindungsgemäßen Verfahrens,
- Figur 3: ein erstes R-X-Diagramm zur beispielhaften Erläuterung der Funktionsweise bei einem symmetrischen Kurzschluss, und
- Figur 4: ein zweites R-X-Diagramm zur beispielhaften Erläuterung der Funktionsweise bei einer Pendelung.

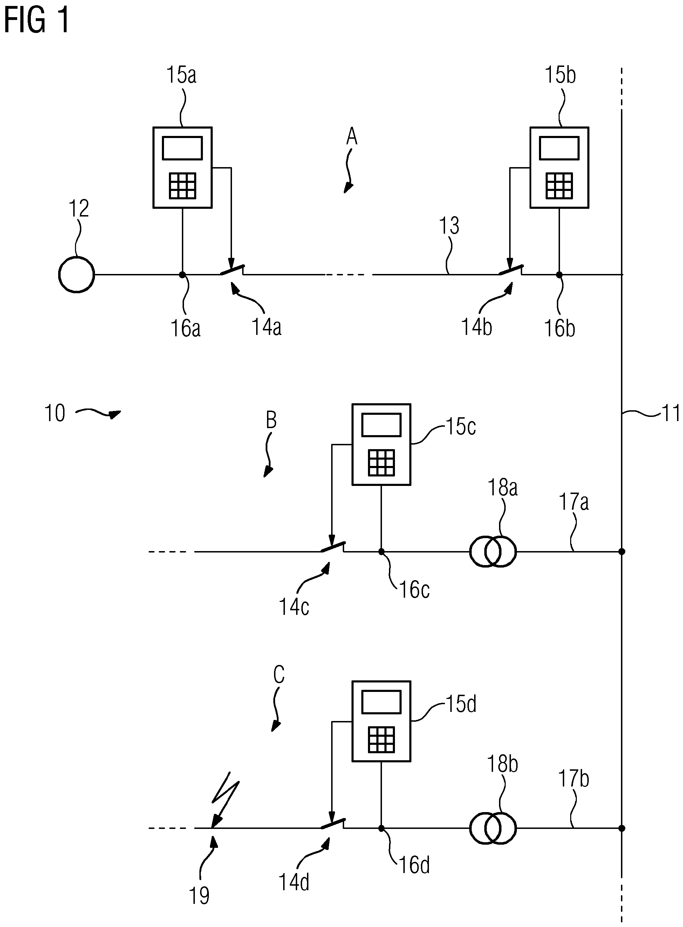

Figur 1 zeigt beispielhaft einen Teil 10 eines im Weiteren nicht näher dargestellten dreiphasigen elektrischen Energieversorgungsnetzes. Der Teil 10 des elektrischen Energieversorgungsnetzes ist durch einen Generator 12 mit elektrischer Energie gespeist. Zwischen dem Generator 12 und einer Sammelschiene 11 befindet sich als Abschnitt A eine schematisch angedeutete dreiphasige Energieübertragungsleitung 13. Die Energieübertragungsleitung 13 ist mit Leistungsschaltern 14a und 14b versehen, mittels denen der Abschnitt A in Form der Energieübertragungsleitung 13 vom restlichen Bereich des Teils 10 des elektrischen Energieversorgungsnetzes abgetrennt werden kann.

Zur Überwachung des Abschnitts A auf möglicherweise auftretende Fehler, wie beispielsweise Kurzschlüsse, sind Schutzgeräte 15a und 15b vorgesehen, bei denen es sich z.B. um sogenannte Distanzschutzgeräte handelt. Die Schutzgeräte 15a und 15b nehmen an Messstellen 16a und 16b Messwerte z.B. in Form von Strom- und Spannungsmesswerten auf und entscheiden anhand dieser Messwerte über einen zulässigen oder einen unzulässigen Betriebszustand auf dem Abschnitt A. Die nähere Funktionsweise eines Distanzschutzgerätes wurde bereits eingangs näher erläutert und soll daher an dieser Stelle nicht nochmals ausführlich behandelt werden.

Sofern eines der Schutzgeräte 15a bzw. 15b oder beide einen unzulässigen Betriebszustand auf dem ihnen zugeordneten Abschnitt A, also der Energieübertragungsleitung 13, erkannt haben, wird ein Ausschaltbefehl an den jeweiligen Leistungsschalter 14a bzw. 14b abgegeben, um den fehlerbehafteten Abschnitt A vom restlichen Teil 10 des elektrischen Energieversorgungsnetzes zu trennen. In diesem Zusammenhang kann auch die Übersendung eines Fehlersignals an das gegenüberliegende Ende der fehlerbehafteten Energieversorgungsleitung 13 gesendet werden, um das dortige Schutzgerät auch zum Erzeugen eines entsprechenden Ausschaltbefehls für seinen Leistungsschalter zu veranlassen. Bei einem auf dem unmittelbar von dem jeweiligen Schutzgerät 15a bzw. 15b überwachten Abschnitt A auftretenden Fehler wird wie eingangs bereits erwähnt auch von einem "internen" Fehler gesprochen.

Mit der Sammelschiene 11 stehen außerdem ein Abschnitt B und ein Abschnitt C des Energieversorgungsnetzes in Form zweier Abzweige 17a und 17b in Verbindung. Ein erster Transformator 18a, beispielsweise ein Mittelspannungs-Transformator, transformiert hinsichtlich des ersten Abzweigs 17a die auf der Sammelschiene 11 anstehende Spannung auf ein entsprechendes Niveau (beispielsweise ein Mittelspannungsniveau) herunter. Entsprechendes erfolgt über einen zweiten Transformator 18b hinsichtlich des zweiten Abzweigs 17b.

Die Abschnitte B und C in Form der Abzweige 17a und 17b können über weitere Leistungsschalter 14c und 14d im Fehlerfalle von der Sammelschiene 11 getrennt werden. Hierzu sind weitere Schutzgeräte 15c und 15d vorgesehen, bei denen es sich auch um Distanzschutzgeräte (aber auch um andere Schutzgeräte, z.B. Überstromzeitschutzgeräte) handeln kann. Diese nehmen an Messstellen 16c und 16d Messwerte auf und entscheiden anhand dieser Messwerte darüber, ob auf den Abzweigen 17a bzw. 17b ein zulässiger oder ein unzulässiger Betriebszustand vorliegt.

Im Falle der Figur 1 soll beispielhaft an einer durch ein Blitzsymbol gekennzeichneten Fehlerstelle 19 auf dem Abschnitt C des Energieversorgungsnetzes (Abzweig 17b) ein symmetrischer Kurzschluss, also ein alle drei Phasen betreffender Kurzschluss, aufgetreten sein. Diesen symmetrischen Kurzschluss müsste das unmittelbar für diesen Abschnitt C zuständige Schutzgerät 15d erkennen und den ihm zugeordneten Leistungsschalter 14d zum Trennen seiner Schaltkontakte veranlassen, um den Abzweig 17b von der Sammelschiene 11 abzutrennen und so eine Auswirkung des Fehlers auf dem restlichen Teil 10 des elektrischen Energieversorgungsnetzes zu verhindern.

Für den Fall, dass der Fehler an der Fehlerstelle 19 von dem zuständigen Schutzgerät 15d jedoch nicht erkannt werden sollte, beispielsweise aufgrund einer Funktionsstörung des Schutzgerätes 15d, ist das Schutzgerät 15a (und ggf. auch das Schutzgerät 15b) als Reserve-Schutzgerät eingerichtet. Es erkennt den aus seiner Sicht externen Kurzschluss und sendet nach Ablauf einer vorgegebenen Staffelzeit, innerhalb der dem Schutzgerät 15d Gelegenheit gegeben wird, auf den Fehler an der Fehlerstelle 19 zu reagieren, ein Auslösesignal an seinen Leistungsschalter 14a, um auf diese Weise den Fehler an der Stelle 19 abzuschalten. Auf diese Weise werden allerdings neben dem fehlerbehafteten Abschnitt C auch die Abschnitte A und B stromlos geschaltet, weswegen eine direkte Abschaltung des Fehlers durch das eigentlich zuständige Schutzgerät (hier Schutzgerät 15d) stets bevorzugt wird.

Sollte auch das Schutzgerät 15b als Reserveschutzgerät eingerichtet sein, würde es bei dem Beispiel gemäß Figur 1 den Kurzschluss an Stelle 19 als Fehler in Rückwärtsrichtung erkennen. Aus Sicht des Schutzgerätes 15a stellt der Kurzschluss hingegen als Fehler in Vorwärtsrichtung dar. Die Schutzgeräte 15a und 15b nehmen den an der Stelle 19 aufgetretenen Fehler als externen Fehler wahr, da dieser nicht in der ihnen unmittelbar zugeordneten Schutzzone, in diesem Fall Abschnitt A (Energieübertragungsleitung 13), liegt.

Die zuverlässige Erkennung und Abschaltung von externen Fehlern auf dem Teil 10 des elektrischen Energieversorgungsnetzes kann durch eine durch den symmetrischen Kurzschluss hervorgerufene Pendelung in dem elektrischen Energieversorgungsnetz erschwert werden. Eine solche Pendelung wird durch eine kurzschlussbedingte Veränderung des Polradwinkels des Generators 12 hervorgerufen.

Da wie eingangs erwähnt üblicherweise eine Pendelung nicht zu einer ungewollten Auslösung eines Leistungsschalters führen soll, sind Distanzschutzgeräte üblicherweise mit sogenannten Pendelerkennungseinrichtungen ausgestattet, die Pendelungen anhand an sich bekannter Algorithmen, z.B. anhand einer Geschwindigkeit, mit der sich die Impedanzwerte auf einer Bahnkurve in einem später näher erläuterten R-X-Diagramm bewegen, erkennen. Wenn von einer Pendelerkennungseinrichtung eine Pendelung erkannt worden ist, erzeugt sie ein sogenanntes Pendelsignal, das die Abgabe eines Ausschaltbefehls durch das Schutzgerät blockiert.

Für den Fall, dass auf einem entfernten Abschnitt (in Figur 1 Abschnitt C) jedoch tatsächlich ein symmetrischer Kurzschluss vorliegt und dieser von der Reserveschutzfunktion des Schutzgerätes nach Ablauf der Staffelzeit abgeschaltet werden soll, ist eine Blockierung des Ausschaltbefehls nicht erwünscht und kann zu einer Ausweitung des - in diesem Fall nicht abgeschalteten Fehlers - führen. Das Schutzgerät 15b muss folglich über eine Reserveschutzfunktion verfügen, die eine Unterscheidung zwischen einer Pendelung im fehlerfreien Fall und einem symmetrischen Kurzschluss, der zu einer Pendelung geführt hat, vornehmen kann.

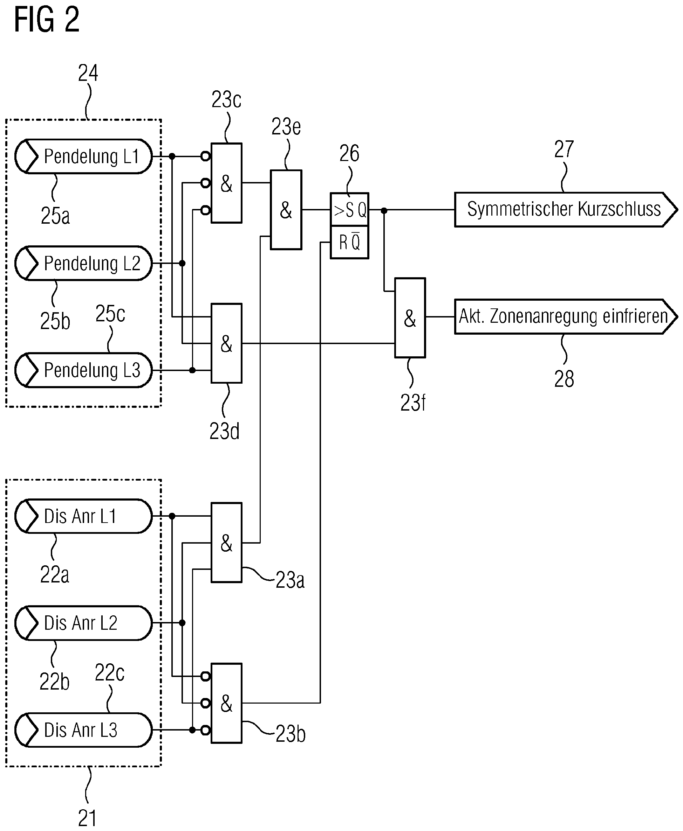

Ein Ausführungsbeispiel eines Verfahrens, mit dem eine solche Unterscheidung vorgenommen werden kann, soll anhand des Logikschaltbildes in Figur 2 näher erläutert werden. Die Logik macht sich den Effekt zunutze, dass eine durch einen symmetrischen Kurzschluss hervorgerufene Pendelung aufgrund der Eigenzeit des Polrades des Generators immer mit einer gewissen Zeitverzögerung gegenüber dem Kurzschluss selbst auftritt. Für das folgende Beispiel soll angenommen werden, dass das Schutzgerät 15a als Reserveschutzgerät für das Schutzgerät 15d eingerichtet ist. Der in dem Logikschaltbild gezeigte Auswertungsalgorithmus ist in einer Gerätesoftware des Schutzgerätes 15a als Reserveschutzfunktion implementiert.

Ein Messwerk 21 einer - nicht explizit dargestellten - Steuereinrichtung des Schutzgerätes 15a führt hierzu eine Distanzschutzfunktion durch, die wie oben näher erläutert anhand mittels einer - nicht dargestellten - Messwerterfassungseinrichtung des Schutzgerätes 15a erfassten Strom- und Spannungszeigermesswerten und daraus berechneten Impedanzzeigermesswerten für jede Phase L1, L2, L3 an der Messstelle 16a eine Überprüfung auf einen aufgetretenen Kurzschluss durchführt. Wird für eine Phase L1, L2, L3 ein Kurzschluss erkannt, regt die Distanzschutzfunktion für diese Phase an und es wird von Distanzschutzblöcken 22a, 22b, 22c des Messwerkes 21 für die jeweilige Phase L1, L2, L3 ein Anregesignal erzeugt. Die Anregesignale der Distanzschutzblöcke 22a, 22b, 22c werden einerseits jeweiligen Eingängen eines ersten UND-Gliedes 23a und andererseits jeweiligen invertierten Eingängen eines zweiten UND-Gliedes 23b zugeführt.

Eine in der Gerätesoftware des Schutzgeräts 15a implementierte Pendelerkennungseinrichtung 24 führt für jede Phase L1, L2, L3 anhand der berechneten Impedanzzeigerwerte eine Pendelerkennung durch. Phasenselektive Pendelerkennungsblöcke 25a, 25b, 25c erzeugen für die jeweilige Phase L1, L2, L3 bei einer erkannten Pendelung Pendelanregesignale, die einerseits über invertierte Eingänge einem nachgelagerten dritten UND-Glied 23c und andererseits einem ebenfalls nachgelagerten vierten UND-Glied 23d zugeführt werden.

Ausgangsseitig ist mit dem ersten und dem dritten UND-Glied 23a und 23c ein fünftes UND-Glied 23e verbunden, mit dessen Ausgang wiederum der Steuereingang S ("Set") eines Flipflops 26 in Verbindung steht. Ein Rücksetzeingang R ("Reset") des Flipflops 26 ist mit dem Ausgang des zweiten UND-Gliedes 23b verbunden.

Das Flipflop 26 steht seinerseits mit seinem Ausgang Q mit einem ersten Signalausgang 27 und einem sechsten UND-Glied 23f in Verbindung (ein invertierter Ausgang *Q̅* des Flipflops 26 bleibt unbelegt). Ein weiterer Eingang des sechsten UND-Gliedes 23f ist mit dem Ausgang des vierten UND-Gliedes 23d verbunden. Ausgangsseitig ist das sechste UND-Glied 23f schließlich mit einem zweiten Signalausgang 28 verbunden.

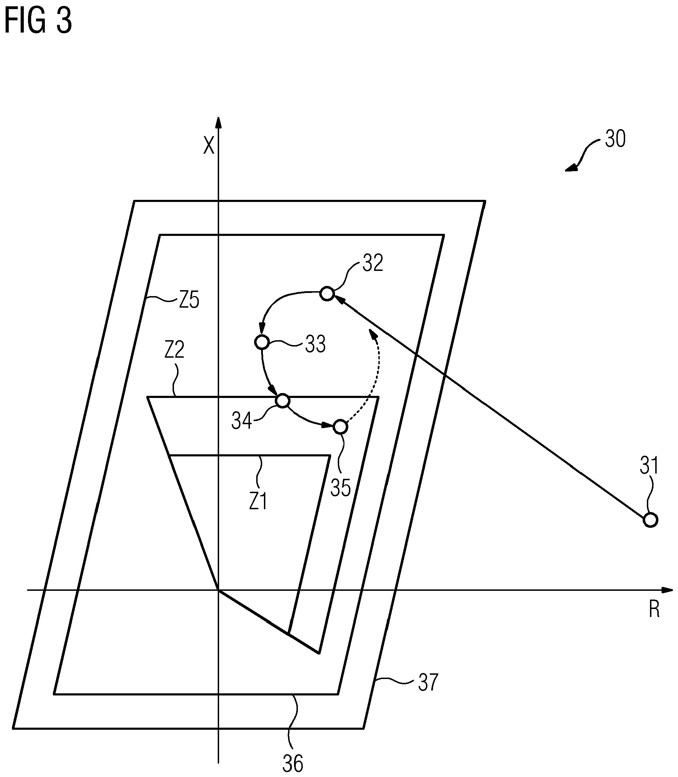

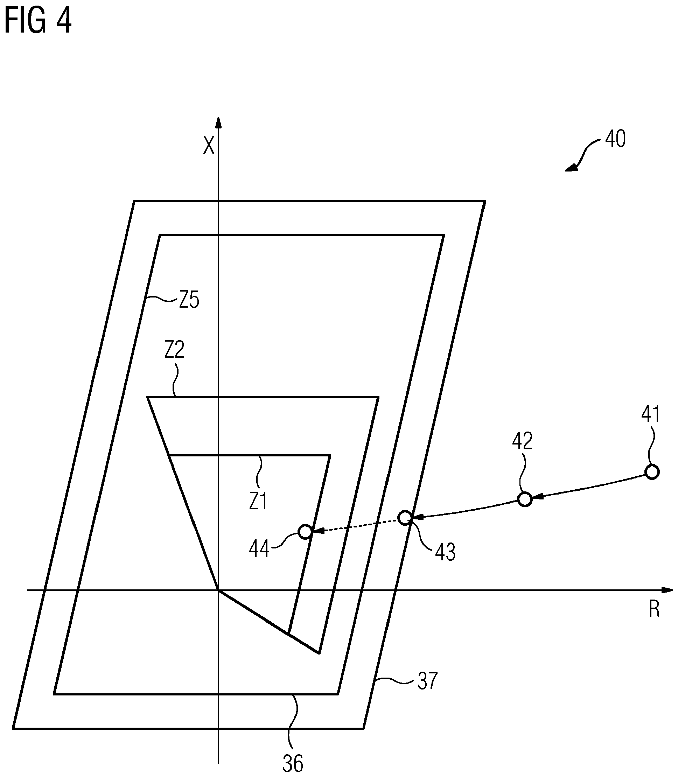

Die Funktionsweise der in Figur 2 dargestellten Logik soll anhand der in Figuren 3 und 4 dargestellten Beispielfälle für einen vorliegenden externen symmetrischen Kurzschluss (Fehlerstelle 19 in Figur 1) und eine in Abwesenheit eines Fehlers stattfindende Pendelung näher erläutert werden.

Hierzu ist in Figur 3 ein sogenanntes R-X-Diagramm 30 dargestellt. In einem R-X-Diagramm werden Impedanzwerte in der komplexen Impedanzebene, also in Form sogenannter komplexer Zahlen mit Real- und Imaginäranteilen, dargestellt. Während auf der mit "R" beschrifteten Achse der Realanteil der Impedanz dargestellt ist, der auch als sogenannter Resistanzanteil bezeichnet wird und den ohmschen Widerstandsanteil der Impedanz angibt, wird auf der mit "X" bezeichneten Achse der imaginäre Anteil der Impedanz dargestellt, der auch als sogenannte Reaktanz bezeichnet wird und den induktiven und/oder kapazitiven Teil der Impedanzwerte angibt.

Jeder Impedanzwert wird durch an einer jeweiligen Messstelle, im vorliegenden Beispiel die Messstelle 16a in Figur 1, aufgenommene Strom- und Spannungsmesswerte, bei denen es sich üblicherweise um Amplitude und Phasenwinkel beinhaltende Strom- und Spannungszeigermesswerte handelt, bestimmt. Die jeweiligen Impedanzwerte werden ebenfalls durch Amplitude und Phasenwinkel in Form eines sogenannten Impedanzzeigers dargestellt (im Folgenden werden daher die Begriffe "Impedanzwert" und "Impedanzzeiger" synonym verwendet), der vom Nullpunkt des R-X-Diagramms ausgehend zu dem die entsprechende Amplitude und entsprechenden Phasenwinkel darstellenden Wert verläuft. Im R-X-Diagramm 30 in Figur 3 ist der Übersichtlichkeit halber jeweils nur der Verlauf der Zeigerspitzen als Kurvenverlauf dargestellt.

Innerhalb des R-X-Diagramms 30 ist ein sogenanntes Auslösepolygon 36 dargestellt, das denjenigen Bereich in der Impedanzebene angibt, der von Impedanzwerten während interner oder externer Fehler üblicherweise angenommen wird. Das Auslösepolygon 36 umfasst mehrere Schutzzonen, von denen in Figur 3 beispielhaft die Hauptschutzzone Z1 und die Reserveschutzzonen Z2 und Z5 gezeigt sind. Liegen die Impedanzwerte innerhalb des Auslösepolygons 36 wird normalerweise ein Ausschaltbefehl erzeugt, um den entsprechenden Leistungsschalter zu öffnen. Dabei wird bei innerhalb der Hauptschutzzone Z1 liegenden Impedanzwerten auf einen internen Fehler geschlossen und der Ausschaltbefehl sofort erzeugt. Den Reserveschutzzonen Z2 und Z5, die zur Erkennung externer Fehler dienen, sind hingegen sogenannte Staffelzeiten zugeordnet, die eine Zeitverzögerung angeben, mit der der Ausschaltbefehl erzeugt werden soll. Hierdurch soll demjenigen Schutzgerät (hier Schutzgerät 15d), das eigentlich zur Abschaltung des externen Fehlers vorgesehen ist, die Möglichkeit zur Erzeugung eines eigenen Ausschaltbefehls gegeben werden, bevor durch den Ausschaltbefehl des Reserveschutzgerätes (hier Schutzgerät 15a) ein größerer Teil des Energieversorgungsnetzes abgeschaltet wird. Üblicherweise steigen die Staffelzeiten mit größer werdenden Reserveschutzzonen an, d.h. die Staffelzeit der Reserveschutzzone Z5 ist größer als diejenige der Reserveschutzzone Z2.

Das Auslösepolygon 36 ist von einem sogenannten Pendelpolygon 37 umgeben. Ab dem Eintritt der Impedanzwerte in das Pendelpolygon kann bei erkannter Pendelung ein einen Ausschaltbefehl blockierendes Pendelsignal erzeugt werden.

Figur 3 zeigt beispielhaft einen Impedanzverlauf der Fehlerschleifen aller drei Phasen L1, L2, L3 während eines symmetrischen Kurzschlusses an der Fehlerstelle 19 (siehe Figur 1). An Stelle 31 liegen zunächst alle Impedanzen im Lastbereich. Beim Eintritt des Kurzschlusses springen alle Impedanzen zur Kurzschlussimpedanz in Zone Z5 (Stelle 32). Die Distanzschutzblöcke 22a, 22b, 22c (vgl. Figur 2) aller drei Phasen regen entsprechend an, so dass die der Reserveschutzzone Z5 zugeordnete Staffelzeit T5 gestartet wird. Die Anregesignale der Distanzschutzblöcke 22a, 22b, 22c werden an das erste und das zweite UND-Glied 23a und 23b übermittelt. Das erste UND-Glied 23a gibt ausgangsseitig ein Signal ab, wenn für alle drei Phasen L1, L2, L3 ein Anregesignal vorliegt, während das zweite UND-Glied 23b aufgrund der invertierten Eingänge genau dann ein Ausgangssignal abgibt, wenn für keine der drei Phasen L1, L2, L3 ein Anregesignal vorliegt. Im vorliegenden Fall gibt folglich nur das erste UND-Glied 23a ausgangsseitig ein Signal an das fünfte UND-Glied 23e ab. Da zu diesem Zeitpunkt von den Pendelerkennungsblöcken 25a, 25b, 25c keine Pendelung erkannt worden ist, gibt das dritte UND-Glied 23c ebenfalls ein Signal ab, das dem weiteren Eingang des fünften UND-Gliedes 23e zugeführt wird und das fünfte UND-Glied 23e entsprechend zur Abgabe eines eigenen Signals an den Steuerausgang S des Flipflops 26 veranlasst. Das Flipflop 26 gibt ausgangsseitig ein Signal ab, das dem ersten Signalausgang 27 zugeführt wird und nach Ablauf der Staffelzeit T5 die Abgabe eines Ausschaltbefehls an den Leistungsschalter 14a bewirkt.

Üblicherweise sollte der Kurzschluss nun über den Leistungsschalter 14d von dem Schutzgerät 15d abgeschaltet werden, welches für den Abschnitt C zuständig ist. In diesem Beispiel findet diese Auslösung jedoch nicht statt, z.B. weil das Schutzgerät 15d defekt ist.

Würde hingegen der symmetrische Kurzschluss vor Ablauf der Staffelzeit T5 durch das eigentlich zuständige Schutzgerät 15d abgeschaltet werden, so würden die Distanzschutzblöcke 22a, 22b, 22c entsprechend keine Anregesignale mehr abgeben, so dass nunmehr anstelle des ersten UND-Gliedes 23a das zweite UND-Glied 23b ein Signal abgeben würde, das dem Rücksetzeingang R des Flipflops 26 zugeführt würde. Das Flipflop 26 würde daraufhin die Abgabe des Signals an den Signalausgang 27 beenden und es würde kein Ausschaltbefehl abgegeben werden.

Aufgrund der tatsächlich jedoch ausbleibenden Abschaltung des Fehlers beginnen sich nun alle Schleifenimpedanzen zu bewegen. An Stelle 33 im Bahnkurvenverlauf wird von den Pendelerkennungsblöcken 25a, 25b, 25c eine Pendelung in allen drei Phasen L1, L2, L3 erkannt, z.B. da die Impedanzgeschwindigkeiten auf der beschriebenen Bahnkurve auf eine Pendelung hinweisen. Anstelle des dritten UND-Gliedes 23c gibt daher nun das vierte UND-Glied 23d ein Ausgangssignal ab. Das Flipflop 26 verharrt trotz damit endender Anregung seines Steuereingangs S in seinem letzten Zustand und gibt weiterhin ausgangsseitig das Signal an den Signalausgang 27 ab. Aufgrund der durch die Signalabgabe des vierten UND-Gliedes 23d nun auch an dem weiteren Eingang des sechsten UND-Gliedes 23f anliegenden Signals gibt das sechste UND-Glied 23f an den Signalausgang 28 ein Signal ab, wodurch die letzte Anregung der Distanzschutzblöcke 22a, 22b, 22c des Messwerks 21 quasi "eingefroren" wird, d.h. es wird keine neue Anregung (z.B. mit einer anderen Staffelzeit) gebildet. Die bereits verstrichene Zeitdauer der Staffelzeit T5 wird nicht zurückgesetzt.

Kurze Zeit später befinden sich an Stelle 34 der Bahnkurve alle Impedanzzeiger in der Reserveschutzzone Z2. Da das Messwerk 21 jedoch in seinem letzten Zustand verharrt ("eingefroren ist"), wird keine neue Zonenanregung gebildet und damit auch nicht die der Reserveschutzzone zugeordnete Staffelzeit T2 gestartet.

Nach Ablauf der Staffelzeit T5 (Stelle 35 der Bahnkurve) befinden sich alle Impedanzzeiger noch in der Reserveschutzzone Z2. Es wird nun richtigerweise ein Ausschaltbefehl abgegeben, obwohl eine Pendelung erkannt wurde. Der Kurzschluss ist damit abgeschaltet.

Figur 4 zeigt in einem R-X-Diagramm 40 beispielhaft einen Impedanzverlauf aller Phasen L1, L2, L3 während einer symmetrischen Pendelung ohne vorliegenden symmetrischen Kurzschluss. Der Aufbau des in Figur 4 gezeigten R-X-Diagramms 40 entspricht dem Aufbau des R-X-Diagramms 30 aus Figur 3, weswegen gleiche Merkmale mit denselben Bezugszeichen gekennzeichnet worden sind.

An Stelle 41 der Bahnkurve befinden sich zunächst alle Impedanzzeiger im Lastbereich. Bei Beginn der Pendelung werden sich alle Impedanzzeiger bewegen, so dass an Stelle 42 der Bahnkurve die Pendelung erkannt wird und die Pendelerkennungsblöcke 25a, 25b, 25c entsprechend ausgangsseitig Signale an das vierte UND-Glied 23d abgeben, das seinerseits ein Signal abgibt. Zu dieser Zeit wird durch die Distanzschutzblöcke 22a, 22b, 22c kein symmetrischer Kurzschluss erkannt.

Nach einer gewissen Zeit treten die Impedanzzeiger an Stelle 43 der Bahnkurve in das Pendelpolygon 37 ein, wodurch ein Pendelsignal abgegeben wird (nicht im Logikschaltbild in Figur 2 dargestellt). Durch das anstehende Pendelsignal wird das Messwerk des Distanzschutzes gesperrt, so dass kein Ausschaltbefehl abgegeben werden kann. Auch wenn die Impedanzen von Stelle 43 bis Stelle 44 der Bahnkurve durch die Distanzschutzzonen Z1, Z2, Z5 laufen, wird keine Staffelzeit gestartet. Eine Anregung des Flipflops 26 wird durch auch bei erkannter das nicht durchgeschaltete dritte und fünfte UND-Glied 23c und 23f verhindert, solange die Pendelung ansteht. Ein Ausschaltbefehl während des Pendelvorgangs findet folgerichtig nicht statt.

Zusammengefasst erkennt die Reserveschutzfunktion des Schutzgeräts 15a anhand der Reihenfolge des Eintretens eines externen symmetrischen Kurzschlusses oder einer Pendelung, ob ein zu klärender Fehler auf dem Abschnitt C des Energieversorgungsnetzes vorliegt und schaltet ihn auch bei dadurch hervorgerufenen Pendelung zuverlässig ab. Bei einer Pendelung, die ohne einen Fehler auftritt, findet hingegen eine Blockierung einer ungewollten Auslösung statt.

## Patentansprüche

1. Verfahren zum Erkennen eines symmetrischen Kurzschlusses in einem mehrphasigen elektrischen Energieversorgungsnetz, bei dem
- mit einem ersten Schutzgerät (15d) ein erster Abschnitt (C) des Energieversorgungsnetzes auf einen symmetrischen Kurzschluss überwacht wird;
- mit einem zweiten Schutzgerät (15a) ein zweiter Abschnitt (A) des Energieversorgungsnetzes auf einen symmetrischen Kurzschluss überwacht wird, wobei
- das zweite Schutzgerät (15a) dazu eingerichtet ist, als Reserveschutzgerät unter Ausführung einer Distanzschutzfunktion auch den ersten Abschnitt (C) des Energieversorgungsnetzes auf einen symmetrischen Kurzschluss zu überwachen und bei Erkennung eines symmetrischen Kurzschlusses in dem ersten Abschnitt (C) nach Ablauf einer vorgegebenen Staffelzeit einen Ausschaltbefehl an einen Leistungsschalter (14a) abzugeben; und wobei
- eine Pendelerkennungseinrichtung (24) vorgesehen ist, die das Energieversorgungsnetz auf das Vorliegen einer elektrischen Pendelung überwacht und ein die Abgabe des Ausschaltbefehls durch das zweite Schutzgerät (15a) blockierendes Pendelsignal abgibt, wenn eine Pendelung in dem Energieversorgungsnetz erkannt worden ist;
**dadurch gekennzeichnet,**
- für den Fall, dass von dem zweiten Schutzgerät (15a) ein symmetrischer Kurzschluss in dem ersten Abschnitt (C) erkannt worden ist, bevor von der Pendelerkennungseinrichtung (24) eine Pendelung in dem Energieversorgungsnetz erkannt worden ist, der Ausschaltbefehl unabhängig vom Vorliegen eines Pendelsignals abgegeben wird, wenn die Staffelzeit abgelaufen ist; und
- für den Fall, dass von der Pendelerkennungseinrichtung (24) eine Pendelung erkannt worden ist, bevor von dem zweiten Schutzgerät (15a) ein symmetrischer Kurzschluss in dem ersten Abschnitt (C) erkannt worden ist, der Ausschaltbefehl durch das anstehende Pendelsignal blockiert wird.

2. Verfahren nach Anspruch 1,
**dadurch gekennzeichnet, dass**
- der Ablauf der Staffelzeit abgebrochen wird, wenn das zweite Schutzgerät (15a) eine Beendigung des symmetrischen Kurzschlusses erkennt.

3. Verfahren nach Anspruch 1 oder 2,
**dadurch gekennzeichnet, dass**
- zur Erkennung eines symmetrischen Kurzschlusses in dem ersten Abschnitt (C) das zweite Schutzgerätes (15a) für jede Phase Stromzeiger- und Spannungszeigermesswerte an einer dem zweiten Abschnitt (A) zugeordneten Messstelle (16a) aufnimmt;
- das zweite Schutzgerät (15a) aus den Stromzeigermesswerten und den zugehörigen Spannungszeigermesswerten für jede Phase Impedanzzeigerwerte bildet und deren Lage in einem komplexen Impedanzdiagramm (30, 40) überprüft, wobei in dem Impedanzdiagramm ein Auslösepolygon (36) vorgesehen ist, das eine Hauptschutzzone (Z1) und zumindest eine Reserveschutzzone (Z2, Z5) aufweist, der die Staffelzeit zugeordnet ist; und
- das zweite Schutzgerät (15a) einen symmetrischen Kurzschluss in dem ersten Abschnitt (C) erkennt, wenn die Impedanzzeigerwerte jeder Phase in der zumindest einen Reserveschutzzone (Z2, Z5) liegen.

4. Verfahren nach Anspruch 3,
**dadurch gekennzeichnet, dass**
- zumindest zwei Reserveschutzzonen (Z2, Z5) vorgesehen sind, denen unterschiedlich lange Staffelzeiten zugeordnet sind; und
- für den Fall, dass von dem zweiten Schutzgerät (15a) ein symmetrischer Kurzschluss in dem ersten Abschnitt (C) erkannt worden ist, bevor von der Pendelerkennungseinrichtung (24) eine Pendelung in dem Energieversorgungsnetz erkannt worden ist, zur Abgabe des Ausschaltbefehls für den ersten Abschnitt (C) diejenige Staffelzeit herangezogen wird, die der Reserveschutzzone (z.B. Z5) zugeordnet ist, in der die Impedanzzeigerwerte unmittelbar vor der Erkennung der Pendelung lagen.

5. Schutzgerät (15a) zur Überwachung eines elektrischen Energieversorgungsnetzes mit
- einer Messwerterfassungseinrichtung zur Erfassung von Stromzeiger- und Spannungszeigermesswerten; und
- einer Steuereinrichtung, die zur Erkennung von symmetrischen Kurzschlüssen in dem Energieversorgungsnetz anhand der erfassten Stromzeiger- und Spannungszeigermesswerte eingerichtet ist;
**dadurch gekennzeichnet, dass**
- die Steuereinrichtung zur Durchführung eines Verfahrens gemäß einem der Ansprüche 1 bis 4 eingerichtet ist.

6. Schutzgerät nach Anspruch 5,
**dadurch gekennzeichnet, dass**
- die Pendelerkennungseinrichtung (24) Bestandteil des Schutzgerätes ist.

## Claims

1. Method for detecting a symmetrical short-circuit in a multiphase electrical power supply network, wherein
- a first section (C) of the power supply network is monitored for a symmetrical short-circuit by means of a first protective device (15d);
- a second section (A) of the power supply network is monitored for a symmetrical short-circuit by means of a second protective device (15a), wherein
- the second protective device (15a) is configured for the purpose of additionally monitoring the first section (C) of the power supply network for a symmetrical short-circuit as a standby protective device while executing a distance protection function and, if a symmetrical short-circuit is detected in the first section (C), of issuing a shutoff command to a circuit breaker (14a) after a predefined grading time has elapsed; and wherein
- an oscillation detection device (24) is provided which monitors the power supply network for the presence of an electrical oscillation and emits an oscillation signal blocking the issuing of the shutoff command by the second protective device (15a) if an oscillation has been detected in the power supply network;
**characterised in that**
- in the event that a symmetrical short-circuit in the first section (C) has been detected by the second protective device (15a) before an oscillation in the power supply network has been detected by the oscillation detection device (24), the shutoff command will be issued irrespective of the presence of an oscillation signal if the grading time has elapsed; and
- in the event that an oscillation has been detected by the oscillation detection device (24) before a symmetrical short-circuit in the first section (C) has been detected by the second protective device (15a), the shutoff command will be blocked by the pending oscillation signal.

2. Method according to claim 1,
**characterised in that**
- the elapsing of the grading time is aborted if the second protective device (15a) detects a termination of the symmetrical short-circuit.

3. Method according to claim 1 or 2,
**characterised in that**
- in order to detect a symmetrical short-circuit in the first section (C), the second protective device (15a) records current pointer and voltage pointer measured values for each phase at a measurement point (16a) assigned to the second section (A);
- from the current pointer measured values and the associated voltage pointer measured values for each phase the second protective device (15a) forms impedance pointer values and checks their position in a complex impedance diagram (30, 40), wherein there is provided in the impedance diagram a tripping polygon (36) which has a main protection zone (Z1) and at least one standby protection zone (Z2, Z5) to which the grading time is assigned; and
- the second protective device (15a) detects a symmetrical short-circuit in the first section (C) if the impedance pointer values of each phase lie in the at least one standby protection zone (Z2, Z5).

4. Method according to claim 3,
**characterised in that**
- at least two standby protection zones (Z2, Z5) are provided to which grading times of different length are assigned; and
- in the event that a symmetrical short-circuit has been detected in the first section (C) by the second protective device (15a) before an oscillation has been detected in the power supply network by the oscillation detection device (24), in order to issue the shutoff command for the first section (C), that grading time is used which is assigned to the standby protection zone (e.g. Z5) in which the impedance pointer values lay immediately prior to the detection of the oscillation.

5. Protective device (15a) for monitoring an electrical power supply network having
- a measured value acquisition device for acquiring current pointer and voltage pointer measured values; and
- a control device which is configured for detecting symmetrical short-circuits in the power supply network on the basis of the acquired current pointer and voltage pointer measured values;
**characterised in that**
- the control device is configured for performing a method according to one of claims 1 to 4.

6. Protective device according to claim 5,
**characterised in that**
- the oscillation detection device (24) is part of the protective device.

## Revendications

1. Procédé de détection d'un court-circuit symétrique dans un réseau d'alimentation en énergie électrique polyphasé, dans lequel
- par un premier appareil (15d) de protection, on contrôle un premier tronçon (C) du réseau d'alimentation en énergie sur le point de savoir s'il y a un court-circuit symétrique ;
- par un deuxième appareil (15a) de protection, on contrôle un deuxième tronçon (A) du réseau d'alimentation en énergie sur le point de savoir s'il y a un court-circuit symétrique, dans lequel
- le deuxième appareil (15a) de protection est conçu pour contrôler, comme appareil de protection de réserve, en exécutant une fonction de protection à distance, également le premier tronçon (C) du réseau d'alimentation en énergie, sur le point de savoir s'il y a un court-circuit symétrique et, si un court-circuit symétrique est détecté dans le premier tronçon (C), pour émettre, après expiration d'un temps de référence donné à l'avance, une instruction d'ouverture d'un disjoncteur (14a) et dans lequel
- il est prévu un dispositif (24) de détection d'oscillation, qui contrôle la présence d'une oscillation électrique dans le réseau d'alimentation en énergie et qui émet un signal d'oscillation bloquant l'émission d'instruction d'ouverture, par le deuxième appareil (15a) de protection, si une oscillation a été détectée dans le réseau d'alimentation en énergie ;
**caractérisé en ce que**
- dans le cas où il a été détecté, par le deuxième appareil (15a) de protection, un court-circuit symétrique dans le premier tronçon (C), avant qu'il ait été détecté, par le dispositif (24) de détection d'oscillation, une oscillation dans le réseau d'alimentation en énergie, l'instruction d'ouverture est émise, indépendamment de la présence d'un signal d'oscillation, si le temps de référence est écoulé et
- dans le cas où il a été détectée une oscillation par le dispositif (24) de détection d'oscillation, avant qu'il ait été détecté, par le deuxième appareil (15a) de protection, un court-circuit symétrique dans le premier tronçon (C), l'instruction d'ouverture est bloquée par le signal d'oscillation en suspens.

2. Procédé suivant la revendication 1,
**caractérisé en ce que**
- on interrompt l'écoulement du temps de référence si le deuxième appareil (15a) de protection détecte une cessation du court-circuit symétrique.

3. Procédé suivant la revendication 1 ou 2,
**caractérisé en ce que**
- pour détecter un court-circuit symétrique dans le premier tronçon (C), le deuxième appareil (15a) de protection enregistre, pour chaque phase, des valeurs de mesure du vecteur courant et du vecteur tension en un point (16a) de mesure associé au deuxième tronçon (A) ;
- le deuxième appareil (15a) de protection forme des valeurs de vecteur d'impédance pour chaque phase à partir des valeurs de mesure de vecteur de courant et des valeurs de mesure de vecteur de tension associées et contrôle leur position dans un diagramme (30, 40) d'impédance complexe, dans lequel il est prévu, dans le diagramme d'impédance, un polygone (36) de déclenchement, qui a une zone (Z1) de protection principale et au moins une zone (Z2, Z5) de protection de réserve à laquelle le temps de référence est associé et
- le deuxième appareil (15a) de protection détecte un court-circuit symétrique dans le premier tronçon (C), si les valeurs de vecteur d'impédance de chaque phase se trouvent dans au moins une zone (Z2, Z5) de protection de réserve.

4. Procédé suivant la revendication 3,
**caractérisé en ce que**
- il est prévu au moins deux zones (Z2, Z5) de protection de réserve, auxquelles sont associés des temps de référence de durée différente et
- dans le cas où il a été détecté, par le deuxième appareil (15a) de protection, un court-circuit symétrique dans le premier tronçon (C), avant qu'il ait été détecté, par le dispositif (24) de détection d'oscillation, une oscillation dans le réseau d'alimentation en énergie, il est mis à profit, pour l'émission de l'instruction d'ouverture, pour le premier tronçon (C), le temps de référence, qui est associé à la zone (par exemple Z5) de protection de réserve, dans laquelle les valeurs de vecteur d'impédance se trouvaient juste avant la détection de l'oscillation.

5. Appareil (15a) de protection pour contrôler un réseau d'alimentation en énergie électrique, comprenant
- un dispositif de détection de valeurs de mesure pour détecter des valeurs de mesure de vecteur de courant et de vecteur de tension et
- un dispositif de commande conçu pour détecter des courtscircuits symétriques dans le réseau d'alimentation en énergie, à l'aide des valeurs de mesure détectées de vecteur de courant et de vecteur de tension ;
**caractérisé en ce que**
- le dispositif de commande est conçu pour effectuer un procédé suivant l'une des revendications 1 à 4.

6. Appareil de protection suivant la revendication 5,
**caractérisé en ce que**
- le dispositif (24) de détection d'oscillation fait partie de l'appareil de protection.
